(19) Europäisches Patentamt / European Patent Office / Office européen des brevets

(11) EP 4 490 692 B1

(12) FASCICULE DE BREVET EUROPEEN

(45) Date de publication et mention
de la délivrance du brevet:
**06.05.2026 Bulletin 2026/19**

(21) Numéro de dépôt: **23709737.3**

(22) Date de dépôt: **10.03.2023**

(51) Classification Internationale des Brevets (IPC):
*G06T 7/00* *(2017.01)*

(52) Classification Coopérative des Brevets (CPC):
**G06T 7/001;** G06T 2207/20081; G06T 2207/20084

(86) Numéro de dépôt international:
**PCT/EP2023/056244**

(87) Numéro de publication internationale:
**WO 2023/170303 (14.09.2023 Gazette 2023/37)**

(54) **METHODE POUR LA DETECTION D'ANOMALIE UTILISANT UN MODELE GLOBAL-LOCAL**

VERFAHREN ZUR ERKENNUNG VON ANOMALIEN UNTER VERWENDUNG EINES GLOBALEN LOKALEN MODELLS

METHOD FOR DETECTING ANOMALIES USING A GLOBAL-LOCAL MODEL

(84) Etats contractants désignés:
AL AT BE BG CH CY CZ DE DK EE ES FI FR GB GR HR HU IE IS IT LI LT LU LV MC ME MK MT NL NO PL PT RO RS SE SI SK SM TR
Etats de validation désignés:
MA TN

(30) Priorité: **11.03.2022 FR 2202156**

(43) Date de publication de la demande:
**15.01.2025 Bulletin 2025/03**

(73) Titulaire: **Visionairy**
**91403 Orsay Cedex (FR)**

(72) Inventeur: **ARTOLA, Aitor**
**75015 PARIS (FR)**

(74) Mandataire: **IP Trust**
**2, rue de Clichy**
**75009 Paris (FR)**

(56) Documents cités:
• **BO ZONG ET AL: "DEEP AUTOENCODING GAUSSIAN MIXTURE MODEL FOR UNSUPERVISED ANOMALY DETECTION", 21 February 2018 (2018-02-21), XP055595490, Retrieved from the Internet <URL:https://openreview.net/pdf?id=BJJLHbb0-> [retrieved on 20190611]**

• ZHEN LI ET AL: "Spatial Gaussian Mixture Model for gender recognition", IMAGE PROCESSING (ICIP), 2009 16TH IEEE INTERNATIONAL CONFERENCE ON, IEEE, PISCATAWAY, NJ, USA, 7 November 2009 (2009-11-07), pages 45 - 48, XP031628581, ISBN: 978-1-4244-5653-6, DOI: 10.1109/ICIP.2009.5413917

• FRANK NIELSEN: "K-MLE: A fast algorithm for learning statistical mixture models", 2012 IEEE INTERNATIONAL CONFERENCE ON ACOUSTICS, SPEECH AND SIGNAL PROCESSING (ICASSP 2012) : KYOTO, JAPAN, 25 - 30 MARCH 2012 ; [PROCEEDINGS], IEEE, PISCATAWAY, NJ, 25 March 2012 (2012-03-25), pages 869 - 872, XP032227265, ISBN: 978-1-4673-0045-2, DOI: 10.1109/ICASSP.2012.6288022

**Description**

**Domaine technique**

La présente invention propose un procédé de détection d'anomalies dans des images.

**État de la technique antérieure**

La détection d'anomalies dans les images consiste à trouver des images, ou des régions d'images, qui ne sont pas conformes au reste des données. Il s'agit d'un problème important dans de nombreuses applications industrielles, médicales ou biologiques. La détection d'anomalies ou de défauts sur des objets industriels est un problème complexe qui nécessite souvent l'intervention d'un opérateur. Cela explique pourquoi le contrôle de la qualité visuelle ou d'aspect dans les chaînes de production a historiquement été laissé aux opérateurs humains. Pourtant, l'automatisation du processus peut accélérer, réduire le coût de production et atténuer les variations de performance causées par la fatigue des opérateurs [24, 33]. Le problème reste cependant un défi pour la vision par ordinateur, car il n'existe pas de définition claire et directe de la normalité dans des données arbitraires ou bien de d'une anomalie de manière générale car les cas d'usage sont très variés.

La détection d'anomalies non supervisée pour les applications industrielles fait l'objet d'une attention particulière ces derniers temps, notamment après la publication d'un nouvel ensemble de données de référence par MvTec [3]. L'exigence « non supervisée » est un défi, mais pourrait conduire à une solution générale. Il est généralement admis que la détection d'anomalies n'est pas un problème de classification classique [30]. En effet, les anomalies ne forment pas des classes bien définies. Elles peuvent être rares ou inconsistantes. De nouveaux types d'anomalies peuvent apparaître plus tard, mais doivent être détectées comme telles sur la base de l'expérience passée des données normales. Cela rend l'annotation des anomalies intrinsèquement impossible. Au contraire, les données normales sont abondantes et peuvent être utilisées pour modéliser la normalité. Cela conduit à considérer la détection d'anomalies comme un problème de détection d'un événement hors distribution normale.

La détection des anomalies a fait l'objet d'un examen approfondi dans la littérature [13, 23, 29]. Les méthodes peuvent être classées en trois grandes catégories : les méthodes antérieures à l'apprentissage profond, les méthodes basées sur des réseaux préentraînés et enfin les méthodes purement basées sur les réseaux de neurones.

**Méthodes antérieures à l'apprentissage profond**

Ces méthodes se concentrent sur la modélisation de données normales, également appelées modèle de fond. Les méthodes homogènes et stochastiques [1, 12, 34, 35, 37] supposent que le modèle de fond suit une distribution connue. Les méthodes centre/ environnement [15, 16, 25] modélisent les anomalies comme des événements locaux contrastant avec leur environnement immédiat. Les méthodes basées sur la sparsité [4, 6, 7, 21] apprennent un dictionnaire clairsemé représentant des données normales. Les anomalies sont définies comme des données qui ne vérifient pas la condition de sparsité. Les méthodes non locales [10,41] supposent que chaque patch d'image dans les données normales appartient à un cluster dense dans l'espace des patchs de l'image. Les anomalies se trouvent plutôt loin de leurs plus proches voisins. Les anomalies sont mesurées en regroupant des petits morceaux d'image, aussi appelés patch en langue anglaise, ce qui conduit directement à une mesure de la rareté. La méthode de Davy et al. [10] comble le fossé avec les méthodes utilisant des réseaux préentraînés, car cette méthode peut être appliquée directement sur des patchs d'images ou sur des caractéristiques de réseaux neuronaux.

**Méthodes basées sur des réseaux préentraînés.**

Utilisation de réseaux préentraînés. Ces méthodes utilisent des réseaux neuronaux pour intégrer des informations sémantiques dans le processus de détection. Ces réseaux peuvent être préentrainés sur des bases de données publiques généralistes comme COCO [19]. SPADE [9] crée une base de caractéristiques à partir d'un réseau neuronal préentraîné avec les images de référence et utilise la norme L2 entre les caractéristiques d'une image et ses K plus proches voisins, aussi désignés sous le terme kNN, de la base de référence en tant que score. Il implique des caractéristiques à différentes couches pour effectuer une analyse multiéchelle. MahaAD [26] modélise chaque couche comme un modèle gaussien global unique. Les anomalies sont ensuite détectées en calculant et en seuillant la distance de Mahalanobis par rapport à cette gaussienne. PaDim [11] étend MahaAD [26] en apprenant un modèle gaussien par position au lieu d'un modèle global.

### Réseau de neurones et apprentissage profond

En utilisant un auto-encodeur variationnel (VAE), le document [1] et [36] apprennent une représentation des données normales. Afin de localiser l'anomalie, la technique d'attention Grad-cam [32] est utilisée : lorsque l'image n'est pas une anomalie, l'attention doit être uniforme sur toute l'image, ceci change lorsque l'image contient une anomalie. Une version faiblement supervisée est également proposée. Dans [17], les anomalies sont trouvées en se basant sur la distribution des gradients. Liu et al. [20] proposent un type similaire de technique d'attention pour détecter et localiser l'anomalie. Dans [28], un réseau neuronal profond est entraîné en minimisant le volume d'une hypersphère qui entoure les représentations du réseau des données. Yi et Yoon [38] suggèrent d'utiliser plutôt les patchs de l'image. Le score d'anomalie est simplement la distance entre le patch codé et son plus proche voisin. Un réseau de style P est entraîné dans [40]. Il apprend à produire une information de structure à partir de l'image. Les auteurs montrent que cette information contient généralement l'anomalie et aide également pendant l'entraînement à reconstruire l'image. Li et al. [28] utilisent une recherche d'architecture neuronale pour trouver de meilleures architectures d'apprentissage profond. Draem [39] apprend à la fois un modèle de reconstruction et un modèle discriminant en utilisant des anomalies simulées. Aitor Artola et al. se proposent dans [2] une normalisation neuronale de l'ensemble d'entraînement pour ensuite appliquer un détecteur d'anomalie basé sur l'algorithme Non-Local Means. Enfin, les méthodes les plus récentes [14, 27] sont basées sur la normalisation des flux. Les flux normalisateurs sont des réseaux neuronaux inversables qui apprennent un modèle transformant les données en une distribution plus simple, généralement gaussienne.

### Etat de la technique le plus proche

Avec Padim [11], Defard et al. ont proposé d'apprendre une seule gaussienne multivariée par pixel dans un espace de caractéristiques de réseau neuronal. Bien qu'ils aient proposé de réduire la dimension des caractéristiques en utilisant l'ACP ou la sélection aléatoire, la dimension est encore trop grande pour la plupart des cas d'utilisation. En effet, la dimension proposée $d = 100$ ou $d = 550$ nécessiterait toujours au moins autant d'échantillons pour estimer une matrice de covariance non contrainte. Cela n'est pas toujours possible dans l'ensemble de données MVTec [3]. De plus, des informations, potentiellement précieuses, sont perdues par la réduction de la dimension. Une autre limitation de ce modèle est l'utilisation d'une seule gaussienne à une position donnée. En effet, un tel modèle pourrait être trop restrictif puisqu'il ne peut pas modéliser les distributions multimodales. La publication "Deep Autoencoding Gaussian Mixture Model for Unsupervised Anomaly Detection", Bo Zong et al., ICLR 2018, divulgue également une méthode de détection non-supervisée des anomalies utilisant un modèle de mélange de gaussiennes.
Un but de l'invention est de proposer un procédé de détection d'anomalie à partir de descripteurs qui apporte une solution à ces problèmes.

### Exposé de l'invention

Selon un premier aspect de l'invention, il est proposé un procédé de détection d'anomalie non supervisé dans une ou une série d'images testées, mis en œuvre par une unité de calcul, selon la revendication 1.
De préférence, les données d'images conformes sont des caractéristiques. Les caractéristiques peuvent être extraites depuis un réseau de neurones préentraîné.
Selon une possibilité, les données d'images conformes sont extraites en utilisant des points de Harris ou encore au moyen de procédé de décomposition en ondelettes.
Avantageusement, les caractéristiques peuvent être extraites par un réseau pré entraîné sur des images, dites conformes, alignées.
Les images conformes alignées peuvent être déterminées par alignement sur une image de référence (Iref), ou plus généralement une référence, à partir d'images dites conformes.
Les données d'images conformes peuvent être des morceaux des images conformes.
Les caractéristiques peuvent provenir d'une décomposition en ondelettes des images conformes.
La détermination du modèle de mélange de gaussienne de caractéristiques peut mettre en œuvre une méthode d'apprentissage en ligne.
La détermination du modèle de mélange de gaussiennes de caractéristiques peut mettre en œuvre une méthode d'apprentissage avec l'algorithme K-MLE.
Le procédé selon l'invention se concentre sur la modélisation des données normales. Alors que les méthodes selon l'état de l'art proposaient des modèles simples basés sur la distance de Mahalanobis ou sur la normalisation lourde du réseau de réseau de flux, la présente invention propose un modèle global-local qui combine la flexibilité d'une modélisation locale précise avec la robustesse d'un modèle de mélange gaussien global. Le procédé selon l'invention apprend un mélange gaussien global et émule ensuite un modèle différent à chaque position en apprenant les poids du mélange localement ce qui permet de ne pas souffrir du défaut de dimensionnalité lorsque peu de données sont

3

disponibles. Du fait de la sparsité des cartes de poids du modèle, il est aussi efficace que les modèles plus simples proposés précédemment, et est performant sur le jeu de données MVTec [3].

## Description des figures

D'autres avantages et particularités de l'invention apparaîtront à la lecture de la description détaillée de mises en œuvre et de modes de réalisation nullement limitatifs, au regard de dessins annexés sur lesquels :

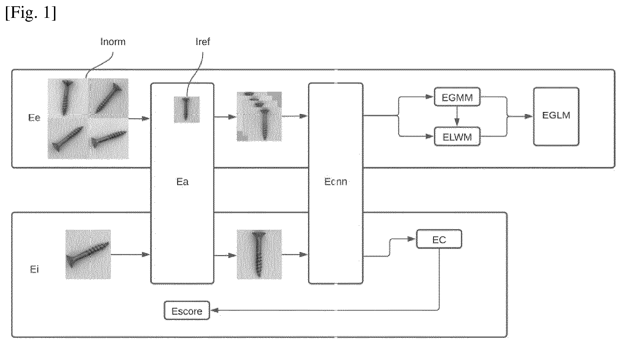

- [Fig.1] la [Fig.1] illustre un procédé de détection non supervisée d'anomalies selon l'invention.

Description de modes de réalisation

Les modes de réalisation décrits ci-après n'étant nullement limitatifs, on pourra notamment considérer des variantes de l'invention ne comprenant qu'une sélection de caractéristiques décrites, par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

Sur les figures un élément apparaissant sur plusieurs figures conserve la même référence.

Inspirés par les méthodes de débruitage d'images, la présente description propose de tirer profit de la redondance des structures dans les objets pour apprendre un modèle plus précis et plus expressif qu'une seule gaussienne, même sous contraintes de données. En effet, pour pallier le manque de données, des méthodes non locales telles que [5] tirent avantage de la redondance, également appelée autosimilarité, des images naturelles pour estimer des modèles de données propres. C'est pourquoi nous proposons le modèle global-local résumé dans la [Fig.1] que nous présentons ensuite.

Comme visible sur [Fig.1], le procédé comporte une étape d'entraînement Ee et une étape d'inférence Ei.

Dans l'exemple représenté, l'étape d'entraînement Ee comporte :

- une étape optionnelle d'alignement Ea d'images conformes Inorm par rapport à une image de référence Iref, l'étape étant optionnelle en ce qu'elle peut être réalisée préalablement à la mise en œuvre du procédé selon l'invention,
- une étape optionnelle d'extraction de caractéristiques ECNN (aussi appelés descripteurs d'images) sur les images conformes alignées, l'étape étant optionnelle en ce qu'elle peut être réalisée préalablement à la mise en œuvre du procédé selon l'invention, et également qu'elle peut ou ne pas être réalisée.

Lorsque l'étape optionnelle d'extraction de caractéristiques ECNN est mise en œuvre, le mode préféré mais non exclusif de l'extraction de caractéristiques procède par application d'un réseau de neurones préentrainé sur les images conformes alignées.

## Alignement d'images conformes

L'étape d'alignement d'images conformes est une étape de normalisation de la position d'une image par rapport à une image de référence.

La normalisation de la position peut être réalisée à partir d'un algorithme de type alignement compositionnel inverse (pour l'anglais *inverse compositional alignment*) et/ou de méthodes par moments. Ces procédés sont connus de l'homme du métier et ne seront pas plus décrits.

## Extraction des caractéristiques

L'étape d'extraction des caractéristiques reçoit en entrée des images conformes alignées.

L'extraction de caractéristiques peut se faire depuis un réseau de neurones.

Par exemple, cette extraction peut être réalisée à partir d'un réseau de neurones à 3 niveaux de couche du réseau. Bien entendu, d'autres niveaux de couches peuvent être envisagés.

Avantageusement, le réseau de neurones peut être préentraîné. Il peut par exemple être préentraîné sur des bases de données non spécifiques au cas d'usage traité par le procédé.

Alternativement, le réseau de neurones peut être entraîné sur les images conformes, notamment mais non limitativement par l'utilisation d'un réseau de neurones de normalisation ou bien de reconstruction d'images.

**Étape Ei**

L'étape Ei comporte en outre les étapes suivantes :

- déterminer (EGMM) un modèle, dit global, de mélange de gaussiennes à partir de données d'images conformes, ledit mélange de gaussiennes à K composantes présentant un ensemble de $\Theta = (\pi_k, \mu_k, \Sigma_k)_{k=1...K}$ de paramètres, tel que pour un k donné, $\mu_k$ est la moyenne et $\Sigma_k$ la covariance de la gaussiennes, $\pi_k$ étant le poids de cette gaussienne dans ledit modèle global,
- pour chaque gaussienne du mélange de gaussienne, déterminer (ELWM) un ensemble de poids locaux $\pi_k(x)$ à la position $x$, tout en conservant les matrices de covariance et les moyennes fixes (pour obtenir une localisation du modèle global de mélange gaussien),
- déterminer un modèle global (EGLM) résultant par remplacement de l'ensemble des poids du mélange de gaussienne par l'ensemble des poids locaux déterminés.

Les données d'images conformes peuvent être des images conformes. Alternativement, les données d'images conformes peuvent être des caractéristiques d'images conformes, obtenues selon l'une des procédés d'extraction de caractéristiques.

L'étape Ei comprend, optionnellement, préalablement à l'étape de détermination du mélange gaussien de caractéristiques à partir des caractéristiques, une étape d'initialisation du mélange gaussien.

**Étape d'initialisation du mélange**

Zoran et Weiss [42] ont montré qu'un mélange gaussien peut représenter fidèlement l'espace entier des patches d'images conformes. La présente invention développe l'utilisation d'un mélange gaussien comme modèle global pour l'ensemble des caractéristiques extraites d'un réseau de neurones appliqué à un ensemble d'images échantillons conformes. Dans ce qui suit, $\Theta = (\pi_k, \mu_k, \Sigma_k)_{k=1...K}$ est utilisé pour désigner un modèle de mélange gaussien à $K$ composantes tel que pour un $k$ donné, $(\mu_k, \Sigma_k)$ définissent une gaussienne de moyenne $\mu_k$ et de covariance $\Sigma_k$. Le poids de cette gaussienne à l'intérieur du modèle est représenté par $\pi_k$.

**4/ Détermination d'un modèle de mélange gaussien de caractéristiques**

Traditionnellement, les mélanges gaussiens sont appris à l'aide de l'algorithme de maximisation de l'espérance (EM). Cependant, cet algorithme est lent lorsqu'il est appliqué avec de nombreuses gaussiennes à des échantillons de grande dimension.

Pour chaque couche c, apprentissage de manière itérative des paramètres du mélange de gaussienne, comme décrit ci-après.

De manière préférée, la présente invention met en œuvre l'algorithme alternatif K-MLE [22], qui fonctionne pour les mélanges de famille exponentielles. Cet algorithme est analogue à l'algorithme K-moyennes et se généralise en utilisant les propriétés des familles exponentielles. Il est plus rapide car il attribue chaque échantillon $u_i$ à une seule gaussienne d'indice $z_i$ et n'implique donc pas tous les échantillons dans le calcul de chaque paramètre. Étant donné un ensemble de données $(u)_{i=1,,N}$ en en dimension $d$, ses étapes d'attribution itérative s'écrivent

$$z_i^{t+1} = argmin\, k \in [\![\, 1, K \,]\!] \; \left(u_i - \mu_k^t\right)^T \Sigma_k^{t-1}\left(u_i - \mu_k^t\right) + loglog\, \left|\Sigma_k^t\right| + 2loglog\, \pi_k^t \quad \# \,(1)$$

Ensuite, en considérant les ensembles $C_k^{t+1} = \left\{ z_i = k \right\}$, l'algorithme calcule séparément les paramètres empiriques de chaque mélange gaussien par :

$$\pi_k^{t+1} = \frac{|C_k^{t+1}|}{N}, \quad \mu_k^{t+1} = \frac{\sum_{u \in |C_k^{t+1}|} u}{|C_k|} \quad \# \,(2)$$

et

$$\Sigma_k^{t+1} = \frac{\sum_{u \in C_k^{t+1}} \left(u - \mu_k\right)\left(u - \mu_k\right)^T}{|C_k|} \quad \#\left(3\right)$$

En variante de cette méthode d'apprentissage, l'algorithme K-MLE peut également être utilisé avec une méthode d'apprentissage en ligne [31].

Les gaussiennes présentant moins de deux échantillons sont supprimées.

Une régularisation $\varepsilon Id$ avec $\varepsilon > 0$ est ajoutée la covariance estimée par l'estimateur de covariance d'échantillon pour estimer les matrices de covariance.

Selon un mode de réalisation préféré, le procédé comporte un régularisateur de rétrécissement [9] qui prend la forme d'une combinaison convexe de la covariance empirique des échantillons Ŝ et de la moyenne de ses valeurs propres multipliée par l'identité $\widehat{F} = \frac{Tr(\widehat{\Sigma})}{d} \mathrm{Id}$.

Le coefficient convexe $\rho$ est choisi pour minimiser l'espérance de l'erreur quadratique moyenne entre la covariance théorique $\Sigma$ et son estimateur régularisé $\hat{\Sigma}$.

$$E\left[\|\Sigma - \hat{\Sigma}\|_F^2\right] \quad \rho \ tel \ que \ \hat{\Sigma} = \left(1 - \rho\right)\hat{S} + \rho\widehat{F} \ \#\left(4\right)$$

La solution optimale du problème est l'oracle $\rho_0$. Cependant, il nécessite la connaissance de la covariance théorique à estimer,

$$\rho_0 = \frac{E\left[\left(\Sigma - \hat{S}\right)\left(\widehat{F} - \hat{S}\right)\right]}{E\left[\|\hat{\Sigma} - \widehat{F}\|_F^2\right]} \ \#\left(5\right)$$

$$\rho_0 = \frac{\left(1 - \frac{2}{d}\right)Tr\left(\Sigma^2\right) + Tr^2\left(\Sigma\right)}{\left(N + 1 - \frac{2}{d}\right)Tr\left(\Sigma^2\right) + \left(1 - \frac{N}{d}\right)Tr^2\left(\Sigma\right)} \ \#\left(6\right)$$

De préférence, on utilise l'estimateur Oracle Approximating Shrinkage (OAS) [8], qui est meilleur en termes d'erreur quadratique moyenne lorsque $N \ll d$. Cet estimateur itératif est défini comme suit

$$\rho_j = \frac{\left(1 - \frac{2}{d}\right)Tr\left(\hat{\Sigma}_j\hat{S}\right) + Tr^2\left(\hat{\Sigma}_j\right)}{\left(N + 1 - \frac{2}{d}\right)Tr\left(\hat{\Sigma}_j\hat{\Sigma}\right) + \left(1 - \frac{N}{d}\right)Tr^2\left(\hat{\Sigma}_j\right)} \ \#\left(7\right)$$

$$\hat{\Sigma}_j = \left(1 - \rho_j\right)\hat{S} + \rho_j\widehat{F} \ \#\left(8\right)$$

et on montre qu'il converge vers une limite $\rho_{OAS}$ équivalente définie par

$$\rho_{OAS} = \frac{\left(1 - \frac{2}{d}\right)Tr\left(\hat{S}^2\right) + Tr^2\left(\hat{S}_j\right)}{\left(N + 1 - \frac{2}{d}\right)\left[Tr\left(\hat{S}^2\right) - \frac{Tr^2(\hat{S})}{d}\right]} \ \#\left(9\right)$$

## Retour au modèle local (ELWM)

A ce stade, le modèle de mélange gaussien est global, et la probabilité d'apparition de chaque caractéristique ne dépend pas de sa position. Cette simplification est excessive. Il est évident qu'une caractéristique peut être normale à une position et anormale à une autre. C'est pourquoi nous proposons une méthode pour ajouter des informations de localisation au modèle, en tirant parti d'un alignement préalable des objets testés.

Il est maintenant décrit comment, pour chaque gaussienne du modèle de mélange gaussien, l'on détermine (ELWM) un ensemble de poids locaux pour obtenir une localisation du modèle global de mélange gaussien.

Les inventeurs ont adapté l'algorithme k-MLE pour apprendre la carte des poids locaux tout en conservant des matrices de covariance et les moyennes fixes. Si $u_m(x)$ désigne le vecteur échantillon de l'image m à la position x, on obtient

$$z_i^{t+1}(x) = argmin\, k \in [\![ 1, N ]\!] \; \left( u_m(x) - \mu_k \right)^T \Sigma_k^{-1} \left( u_m(x) - \mu_k \right) + log\, |\Sigma_k| + 2log\, \pi_k^i(x) \quad \# \, (10)$$

$$C_k^{t+1}(x) = \left\{ z_m^{t+1}(x) = k, \; \forall m \right\} \# \, (11)$$

$$\pi_k^{t+1}(x) = \frac{|C_k^{t+1}(x)|}{N} \# \, (12)$$

Pour obtenir plus d'échantillons par position et réduire le nombre de fausses alarmes causées par de petites déformations ou de légères variations de position des objets, les inventeurs proposent d'effectuer le calcul des poids en x en utilisant les échantillons dans un petit cercle de rayon r centré sur x. La valeur r peut par exemple être prédéterminée et être égale à 1 pixel.

## Étape EGLM

Pour éviter une analyse trop locale, selon une possibilité de l'invention, les paramètres appris globaux ($\mu_k$, $\Sigma_k$) des gaussiennes sont conservés, mais il est proposé de déduire les poids de mélange $\pi_k(x)$ dépendants de la position à partir du mélange gaussien.

## Étape d'inférence Ei

L'étape d'interférence comportant une détermination d'un score d'anomalie par application dudit modèle global sur une ou une série d'images testées.

Pendant le test, la probabilité d'apparition d'une caractéristique à une position spécifique est estimée à l'aide du modèle global-local. Un score global et une décision sont dérivés de la carte de probabilité.

Traditionnellement, les échantillons sont affectés à la gaussienne la plus proche pour détecter les anomalies. La distance de Mahalanobis à cette gaussienne est ensuite mesurée. Cependant, cette attribution implique d'ignorer les interactions entre les gaussiennes. Or, les gaussiennes multivariées d'un mélange peuvent avoir de fortes interactions et des maxima locaux différents des centres des gaussiennes.

Le modèle de mélange gaussien est le modèle de mélange préféré dans l'invention, cependant le procédé peut mettre en œuvre d'autres modèles de mélanges de familles exponentielles.

Selon l'invention, il est proposé de considérer le mélange dans son ensemble lors de l'analyse d'un nouvel échantillon Ei. En utilisant le modèle global-local, le procédé comporte un calcul de probabilité Ec pour chaque vecteur caractéristique d'une image utilisant le mélange, formant ainsi une carte de probabilité. Le vecteur caractéristique de l'image est obtenu au moyen du réseau de neurones préentraîné, à partir de l'image alignée Ec.

Les méthodes les plus récentes évaluent généralement l'image en utilisant la pire valeur (c'est-à-dire la plus petite probabilité) de cette carte. Les inventeurs proposent d'utiliser le quantile q qui est plus robuste en ce qui concerne les fausses alarmes.

La méthode proposée peut également être rendue multiéchelle en prenant des caractéristiques à différentes couches d'un réseau. Pour cela, la méthode comporte une étape d'ajustement du mélange à chaque couche sélectionnée. La méthode comporte ensuite une agrégation des cartes de probabilité en prenant leur produit, ce qui correspond à supposer l'indépendance des couches.

Le score est déterminé parmi les probabilités triées dans l'ordre ascendant dans le masquées, et sélection selon le q-quantile de ces probabilités comme étant le score.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

**Références**

[1] Jinwon An. Variational Autoencoder based Anomaly Detection using Reconstruction Probability. Arxiv, 2016. 1

[2] Aitor Artola, Yannis Kolodziej, Jean-Michel Morel, and Thibaud Ehret. Unsupervised variability normalization for anomaly detection. In 2021 IEEE International Conference on Image Processing (ICIP), pages 989-993. IEEE, 2021.

[3] Paul Bergmann, Michael Fauser, David Sattlegger, and Carsten Steger. Mvtec ad-a comprehensive real-world dataset for unsupervised anomaly detection. In CVPR, 2019.

[4] Giacomo Boracchi, Diego Carrera, and Brendt Wohlberg. Novelty detection in images by sparse representations. In 2014 IEEE Symposium on Intelligent Embedded Systems, pages 47-54. IEEE, 2014.

[5] Antoni Buades, Bartomeu Coll, and J-M Morel. A non-local algorithm for image denoising. In CVPR. IEEE, 2005.

[6] Diego Carrera, Giacomo Boracchi, Alessandro Foi, and Brendt Wohlberg. Detecting anomalous structures by convolutional sparse models. In 2015 International Joint Conference on Neural Networks, pages 1-8. IEEE, 2015.

[7] Diego Carrera, Giacomo Boracchi, Alessandro Foi, and Brendt Wohlberg. Scale-invariant anomaly detection with multiscale group-sparse models. In ICIP. IEEE, 2016.

[8] Yilun Chen, Ami Wiesel, Yonina C. Eldar, and Alfred O. Hero. Shrinkage algorithms for mmse covariance estimation. IEEE Transactions on Signal Processing, 58:5016-5029, 2010.

[9] Niv Cohen and Yedid Hoshen. Transformer-based anomaly segmentation. arXiv, 2020.

[10] Axel Davy, Thibaud Ehret, Jean-Michel Morel, and Mauricio Delbracio. Reducing anomaly detection in images to detection in noise. In ICIP. IEEE, 2018.

[11] Thomas Defard, Aleksandr Setkov, Angelique Loesch, and Romaric Audigier. Padim: A patch distribution modeling framework for anomaly detection and localization. In Alberto Del Bimbo, Rita Cucchiara, Stan Sclaroff, Giovanni Maria Farinella, Tao Mei, Marco Bertini, Hugo Jair Escalante, and Roberto Vezzani, editors, Pattern Recognition. ICPR International Workshops and Challenges, pages 475-489, Cham, 2021. Springer International Publishing.

[12] Bo Du and Liangpei Zhang. Random-selection-based anomaly detector for hyperspectral imagery. IEEE Transactions on Geoscience and Remote sensing, 49(5):1578-1589, 2011.

[13] Thibaud Ehret, Axel Davy, Jean-Michel Morel, and Mauricio Delbracio. Image anomalies: A review and synthesis of detection methods. JMIV, 61(5):710-743, 2019.

[14] Denis Gudovskiy, Shun Ishizaka, and Kazuki Kozuka. Cflow-ad: Real-time unsupervised anomaly detection with localization via conditional normalizing flows. In Proceedings of the IEEE/CVF Winter Conference on Applications of Computer Vision, 2022.

[15] Toshifumi Honda and Shree K Nayar. Finding" anomalies" in an arbitrary image. In ICCV. IEEE, 2001.

[16] Laurent Itti, Christof Koch, and Ernst Niebur. A model of saliency-based visual attention for rapid scene analysis. PAMI, 20(11):1254-1259, 1998.

[17] Gukyeong Kwon, Mohit Prabhushankar, Dogancan Temel, and Ghassan AlRegib. Backpropagated gradient representations for anomaly detection. In European Conference on Computer Vision, pages 206-226. Springer, 2020.

[18] Yuening Li, Zhengzhang Chen, Daochen Zha, Kaixiong Zhou, Haifeng Jin, Haifeng Chen, and Xia Hu. Autood: Automated outlier detection via curiosity-guided search and self-imitation learning. ICDE, 2020.

[19] Tsung-Yi Lin, Michael Maire, Serge Belongie, James Hays, Pietro Perona, Deva Ramanan, Piotr Doll ar, and C Lawrence Zitnick. Microsoft coco: Common objects in context. In European conference on computer vision, pages 740-755. Springer, 2014.

[20] Wenqian Liu, Runze Li, Meng Zheng, Srikrishna Karanam, ZiyanWu, Bir Bhanu, Richard J Radke, and Octavia Camps. Towards visually explaining variational autoencoders. In Proceedings of the IEEE/CVF Conference on Computer Vision and Pattern Recognition, pages 8642-8651, 2020.

[21] Ran Margolin, Ayellet Tal, and Lihi Zelnik-Manor. What makes a patch distinct? In CVPR, 2013.

[22] Frank Nielsen. K-mle: A fast algorithm for learning statistical mixture models. In 2012 IEEE International Conference on Acoustics, Speech and Signal Processing (ICASSP), pages 869-872, 2012. 2

[23] Guansong Pang, Chunhua Shen, Longbing Cao, and Anton Van Den Hengel. Deep learning for anomaly detection: A review. ACM Computing Surveys (CSUR), 54(2):1-38, 2021.

[24] Xiangqian Peng, Youping Chen, Wenyong Yu, Zude Zhou, and Guodong Sun. An online defects inspection method for float glass fabrication based on machine vision. The International Journal of Advanced Manufacturing Technology, 39(11-12):1180-1189, 2008.

[25] Irving S Reed and Xiaoli Yu. Adaptive multiple-band cfar detection of an optical pattern with unknown spectral distribution. IEEE Transactions on Acoustics, Speech, and Signal Processing, 38(10):1760-1770, 1990.

[26] O. Rippel, P. Mertens, and D. Merhof. Modeling the distribution of normal data in pre-trained deep features for anomaly detection. In 2020 25th International Conference on Pattern Recognition (ICPR), pages 6726-6733, Los Alamitos, CA, USA, jan 2021. IEEE Computer Society.

[27] Marco Rudolph, Tom Wehrbein, Bodo Rosenhahn, and BastianWandt. Fully convolutional cross-scale-flows for image based defect detection. In Winter Conference on Applications of Computer Vision (WACV), Jan. 2022. 2, 6

[28] Lukas Ruff, Nico G ornitz, Lucas Deecke, Shoaib Ahmed Siddiqui, Robert Vandermeulen, Alexander Binder, Emmanuel M uller, and Marius Kloft. Deep one-class classification. In International Conference on Machine Learning, pages 4390-4399, 2018.

[29] Lukas Ruff, Jacob R Kauffmann, Robert A Vandermeulen, Gr egoire Montavon, Wojciech Samek, Marius Kloft, Thomas G Dietterich, and Klaus-Robert M uller. A unifying review of deep and shallow anomaly detection. Proceedings of the IEEE, 2021.

[30] Olga Russakovsky, Jia Deng, Hao Su, Jonathan Krause, Sanjeev Satheesh, Sean Ma, Zhiheng Huang, Andrej Karpathy, Aditya Khosla, Michael Bernstein, Alexander C. Berg, and Li Fei-Fei. ImageNet Large Scale Visual Recognition Challenge. IJCV, 115(3):211-252, 2015.

[31] Christophe Saint-Jean and Frank Nielsen. Online k-mle for mixture modeling with exponential families. pages 340-348, 01 2015.

[32] Ramprasaath R Selvaraju, Michael Cogswell, Abhishek Das, Ramakrishna Vedantam, Devi Parikh, and Dhruv Batra. Grad-cam: Visual explanations from deep networks via gradient-based localization. In ICCV, 2017.

[33] Hui-Chao Shang, You-Ping Chen, Wen-Yong Yu, and Zu-De Zhou. Online auto-detection method and system of presswork quality. The International Journal of Advanced Manufacturing Technology, 33(7-8):756-765, 2007.

[34] Lionel Tarassenko, Paul Hayton, Nicholas Cerneaz, and Michael Brady. Novelty detection for the identification of masses in mammograms. 1995.

[35] Du-Ming Tsai and Tse-Yun Huang. Automated surface inspection for statistical textures. Image and Vision computing, 21(4):307-323, 2003.

[36] Shashanka Venkataramanan, Kuan-Chuan Peng, Rajat Vikram Singh, and Abhijit Mahalanobis. Attention guided anomaly localization in images. In ECCV, 2020.

[37] Xianghua Xie and Majid Mirmehdi. Texems: Texture exemplars for defect detection on random textured surfaces. IEEE PAMI, 29(8):1454-1464, 2007.

[38] Jihun Yi and Sungroh Yoon. Patch svdd: Patch-level svdd for anomaly detection and segmentation. In ACCV, 2020.

[39] Vitjan Zavrtanik, Matej Kristan, and Danijel Skocaj. Draema discriminatively trained reconstruction embedding for surface anomaly detection. In Proceedings of the IEEE/CVF International Conference on Computer Vision, pages 8330-8339, 2021.

[40] Kang Zhou, Yuting Xiao, Jianlong Yang, Jun Cheng, Wen Liu, Weixin Luo, Zaiwang Gu, Jiang Liu, and Shenghua. Gao. Encoding structure-texture relation with p-net for anomaly detection in retinal images. In ECCV, 2020.

[41] Maria Zontak and Israel Cohen. Defect detection in patterned wafers using anisotropic kernels. Machine Vision and Applications, 21(2):129-141, 2010.

[42] Daniel Zoran and Yair Weiss. From learning models of natural image patches to whole image restoration. In 2011 International Conference on Computer Vision, pages 479-486. IEEE, 2011.

**Revendications**

1. Procédé de détection d'anomalie non supervisé dans une image ou une série d'images testées, mis en œuvre par une unité de calcul, comportant les étapes suivantes :

   • une étape (Ee) de détermination d'un modèle à partir d'images dites conformes,
   • une étape d'inférence (Ei) comportant une détermination d'un score d'anomalie par application dudit modèle sur ladite image ou la série d'images testées,
   l'étape de détermination d'un modèle comportant l'étape suivante :

   • déterminer (EGMM) un modèle global de mélange de gaussiennes à partir de données d'images conformes, ledit modèle de gaussiennes à K composantes présentant un ensemble $\Theta = (\pi_k, \mu_k, \Sigma_k)_{k=1...K}$ de paramètres, tel que pour un k donné, $\mu_k$ est la moyenne et $\Sigma_k$ la covariance de la gaussienne, $\pi_k$ étant le poids de cette gaussienne dans ledit modèle global,

   **caractérisé en ce que** l'étape de détermination d'un modèle comporte également les étapes suivantes :

   • pour chaque gaussienne dudit mélange de gaussienne, déterminer (ELWM) un ensemble de poids locaux $\pi_k(x)$ à la position $x$, tout en conservant les matrices de covariance et les moyennes fixes,

9

• déterminer un modèle local, dit global local (EGLM) résultant par remplacement de l'ensemble des poids du mélange de gaussiennes par l'ensemble des poids locaux déterminés.

2. Procédé selon la revendication 1, dans lequel les données d'images conformes sont des caractéristiques.

3. Procédé selon la revendication 2, dans lequel les caractéristiques sont extraites depuis un réseau de neurones préentraîné.

4. Procédé selon la revendication 3, dans lequel les caractéristiques sont extraites (ECnn) par un réseau préentraîné sur des images, dites conformes, alignées.

5. Procédé selon la revendication 4, dans lequel les images conformes alignées sont déterminées par alignement sur une image de référence (Iref) à partir d'images dites conformes.

6. Procédé selon la revendication 1, dans lequel les données d'images conformes sont des morceaux des images conformes.

7. Procédé selon la revendication 2, dans lequel les caractéristiques proviennent d'une décomposition en ondelettes des images conformes.

8. Procédé selon l'une quelconque des revendications précédentes, dans lequel la détermination (EGMM) du modèle de mélange de gaussiennes de caractéristiques met en œuvre une méthode d'apprentissage en ligne.

9. Procédé selon l'une quelconque des revendications précédentes, dans lequel la détermination (EGMM) du modèle de mélange de gaussienne de caractéristiques met en œuvre une méthode d'apprentissage avec l'algorithme K-MLE.

## Patentansprüche

1. Verfahren für eine unüberwachte Anomalieerkennung in einem Bild oder einer Reihe von getesteten Bildern, das durch eine Recheneinheit implementiert wird, umfassend die folgenden Schritte:

   • einen Schritt (Ee) zum Bestimmen eines Modells aus sogenannten konformen Bildern,
   • einen Inferenzschritt (Ei), umfassend eine Bestimmung eines Anomaliewerts durch Anwendung des Modells auf das Bild oder die Reihe von getesteten Bildern,
   der Schritt der Modellbestimmung umfassend den folgenden Schritt:

   • Bestimmen eines globalen Gaußschen Mischungsmodells (EGMM) aus konformen Bilddaten, wobei das Gaußsche Modell mit K-Komponenten einen Satz $\Theta = (\pi_k, \mu_k, \Sigma_k)_{k=1...K}$ von Parametern aufweist, wie zum Beispiel für ein gegebenes k, $\mu_k$ der Durchschnitt und $\Sigma_k$ die Kovarianz der Gaußschen Verteilung ist, $\pi_k$ das Gewicht dieser Gaußschen Verteilung in dem globalen Modell ist,

   **dadurch gekennzeichnet, dass** die Modellbestimmungsphase auch die folgenden Schritte umfasst:

   • für jede Gaußsche Funktion der Gaußschen Mischung, Bestimmen (ELWM) eines Satzes von lokalen Gewichten $\pi_k(x)$ an der Position $x$ unter Beibehaltung der Kovarianzmatrizen und der festen Mittelwerte,
   • Bestimmen eines lokalen Modells, genannt global lokal (EGLM), das sich durch Ersetzen des Satzes der Gewichte der Gaußschen Mischung durch den Satz der bestimmten lokalen Gewichte ergibt.

2. Verfahren nach Anspruch 1, wobei die konformen Bilddaten Merkmale sind.

3. Verfahren nach Anspruch 2, wobei die Merkmale aus einem vortrainierten neuronalen Netzwerk extrahiert werden.

4. Verfahren nach Anspruch 3, wobei die Merkmale durch ein vortrainiertes Netzwerk an ausgerichteten, sogenannten konformen Bildern extrahiert werden (ECnn).

5. Verfahren nach Anspruch 4, wobei die ausgerichteten konformen Bilder durch Ausrichtung an einem Referenzbild (Iref) aus sogenannten konformen Bildern bestimmt werden.

6. Verfahren nach Anspruch 1, wobei die konformen Bilddaten Teile der konformen Bilder sind.

7. Verfahren nach Anspruch 2, wobei die Merkmale aus einer Wavelet-Zerlegung konformer Bilder stammen.

8. Verfahren nach einem der vorstehenden Ansprüche, wobei die Bestimmung (EGMM) des Gaußschen Mischungsmodells von Merkmalen ein Online-Lernverfahren implementiert.

9. Verfahren nach einem der vorstehenden Ansprüche, wobei die Bestimmung (EGMM) des Gaußschen Mischungsmodells von Merkmalen ein Lernverfahren mit dem K-MLE-Algorithmus implementiert.

**Claims**

1. Unsupervised method for detecting anomalies in an image or a series of images under test, which method is implemented by a computing unit, comprising the following steps:

   • a step (Ee) of determining a model from so-called conformal images,
   • an inference step (Ei) comprising determining an anomaly score by applying said model to said image or to the series of images under test,
   the model determination step comprising the following step:

   • determining (EGMM) a global Gaussian mixture model from conformal image data, said K-component Gaussian model having a set $\Theta = (\pi_k, \mu_k, \Sigma_k)_{k=1...K}$ of parameters such that, for a given k, $\mu_k$ is the average and $\Sigma_k$ is the covariance of the Gaussian, $\pi_k$ being the weight of this Gaussian in said global model,

   **characterized in that** the model determination step also comprises the following steps:

   • for each Gaussian of said Gaussian mixture, determining (ELWM) a set of local weights $\pi_k(x)$ at the position $x$ while preserving the covariance matrices and fixed averages,
   • determining a local model, a so-called global local model (EGLM), by replacing the set of weights of the Gaussian mixture with the set of determined local weights.

2. Method according to claim 1, wherein the conformal image data are features.

3. Method according to claim 2, wherein the features are extracted from a pre-trained neural network.

4. Method according to claim 3, wherein the features are extracted (ECnn) by a network pre-trained using aligned, so-called conformal images.

5. Method according to claim 4, wherein the aligned conformal images are determined by alignment with a reference image (Iref) from the so-called conformal images.

6. Method according to claim 1, wherein the conformal image data are pieces of the conformal images.

7. Method according to claim 2, wherein the features originate from a wavelet decomposition of the conformal images.

8. Method according to any of the preceding claims, wherein determining (EGMM) the Gaussian mixture model of the features implements an online learning method.

9. Method according to any of the preceding claims, wherein determining (EGMM) the Gaussian mixture model of the features implements a learning method with the K-MLE algorithm.

[Fig. 1]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BO ZONG et al.** Deep Autoencoding Gaussian Mixture Model for Unsupervised Anomaly Detection. ICLR, 2018
- **JINWON AN**. Variational Autoencoder based Anomaly Detection using Reconstruction Probability. *Arxiv*, 2016, 1
- Unsupervised variability normalization for anomaly detection. **AITOR ARTOLA** ; **YANNIS KOLODZIEJ** ; **JEAN-MICHEL MOREL** ; **THIBAUD EHRET**. 2021 IEEE International Conference on Image Processing (ICIP). IEEE, 2021, 989-993
- **PAUL BERGMANN** ; **MICHAEL FAUSER** ; **DAVID SATTLEGGER** ; **CARSTEN STEGER**. Mvtec ad-a comprehensive real-world dataset for unsupervised anomaly detection. *CVPR*, 2019
- Novelty detection in images by sparse representations. **GIACOMO BORACCHI** ; **DIEGO CARRERA** ; **BRENDT WOHLBERG**. IEEE Symposium on Intelligent Embedded Systems. IEEE, 2014, 47-54
- A non-local algorithm for image denoising. **ANTONI BUADES** ; **BARTOMEU COLL** ; **J-M MOREL**. CVPR. IEEE, 2005
- Detecting anomalous structures by convolutional sparse models. **DIEGO CARRERA** ; **GIACOMO BORACCHI** ; **ALESSANDRO FOI** ; **BRENDT WOHLBERG**. 2015 International Joint Conference on Neural Networks. IEEE, 2015, 1-8
- Scale-invariant anomaly detection with multiscale group-sparse models. **DIEGO CARRERA** ; **GIACO-MO BORACCHI** ; **ALESSANDRO FOI** ; **BRENDT WOHLBERG**. ICIP. IEEE, 2016
- **YILUN CHEN** ; **AMI WIESEL** ; **YONINA C. ELDAR** ; **ALFRED O. HERO**. Shrinkage algorithms for mmse covariance estimation. *IEEE Transactions on Signal Processing*, 2010, vol. 58, 5016-5029
- **NIV COHEN** ; **YEDID HOSHEN**. Transformer-based anomaly segmentation. *arXiv*, 2020
- Reducing anomaly detection in images to detection in noise. **AXEL DAVY** ; **THIBAUD EHRET** ; **JEAN-MICHEL MOREL** ; **MAURICIO DELBRACIO**. ICIP. IEEE, 2018
- Padim: A patch distribution modeling framework for anomaly detection and localization. **THOMAS DEFARD** ; **ALEKSANDR SETKOV** ; **ANGELIQUE LOESCH** ; **ROMARIC AUDIGIER**. ICPR International Workshops and Challenges. Springer International Publishing, 2021, 475-489
- **BO DU** ; **LIANGPEI ZHANG**. Random-selection-based anomaly detector for hyperspectral imagery. *IEEE Transactions on Geoscience and Remote sensing*, 2011, vol. 49 (5), 1578-1589
- **THIBAUD EHRET** ; **AXEL DAVY** ; **JEAN-MICHEL MOREL** ; **MAURICIO DELBRACIO**. Image anomalies: A review and synthesis of detection methods. *JMIV*, 2019, vol. 61 (5), 710-743
- **DENIS GUDOVSKIY** ; **SHUN ISHIZAKA** ; **KAZUKI KOZUKA**. Cflow-ad: Real-time unsupervised anomaly detection with localization via conditional normalizing flows. *Proceedings of the IEEE/CVF Winter Conference on Applications of Computer Vision*, 2022
- Finding'' anomalies'' in an arbitrary image. **TOSHI-FUMI HONDA** ; **SHREE K NAYAR**. ICCV. IEEE, 2001
- **LAURENT ITTI** ; **CHRISTOF KOCH** ; **ERNST NIEBUR**. A model of saliency-based visual attention for rapid scene analysis. *PAMI*, 1998, vol. 20 (11), 1254-1259
- Backpropagated gradient representations for anomaly detection. **GUKYEONG KWON** ; **MOHIT PRABHUSHANKAR** ; **DOGANCAN TEMEL** ; **GHASSAN ALREGIB**. European Conference on Computer Vision. Springer, 2020, 206-226
- **YUENING LI** ; **ZHENGZHANG CHEN** ; **DAOCHEN ZHA** ; **KAIXIONG ZHOU** ; **HAIFENG JIN** ; **HAIFENG CHEN** ; **XIA HU**. Autood: Automated outlier detection via curiosity-guided search and self-imitation learning. *ICDE*, 2020
- Microsoft coco: Common objects in context. **TSUNG-YI LIN** ; **MICHAEL MAIRE** ; **SERGE BELONGIE** ; **JAMES HAYS** ; **PIETRO PERONA** ; **DEVA RAMA-NAN** ; **PIOTR DOLL AR** ; **C LAWRENCE ZITNICK**. European conference on computer vision. Springer, 2014, 740-755
- **WENQIAN LIU** ; **RUNZE LI** ; **MENG ZHENG** ; **SRIKRISHNA KARANAM** ; **ZIYANWU** ; **BIR BHA-NU** ; **RICHARD J RADKE** ; **OCTAVIA CAMPS**. Towards visually explaining variational autoencoders. *Proceedings of the IEEE/CVF Conference on Computer Vision and Pattern Recognition*, 2020, 8642-8651
- **RAN MARGOLIN** ; **AYELLET TAL** ; **LIHI ZELNIK-MANOR**. What makes a patch distinct?. *CVPR*, 2013

- **FRANK NIELSEN**. K-mle: A fast algorithm for learning statistical mixture models. *2012 IEEE International Conference on Acoustics, Speech and Signal Processing (ICASSP)*, 2012, 869-872
- **GUANSONG PANG** ; **CHUNHUA SHEN** ; **LONGBING CAO** ; **ANTON VAN DEN HENGEL**. Deep learning for anomaly detection: A review. *ACM Computing Surveys (CSUR)*, 2021, vol. 54 (2), 1-38
- **XIANGQIAN PENG** ; **YOUPING CHEN** ; **WENYONG YU** ; **ZUDE ZHOU** ; **GUODONG SUN**. An online defects inspection method for float glass fabrication based on machine vision. *The International Journal of Advanced Manufacturing Technology*, 2008, vol. 39 (11-12), 1180-1189
- **IRVING S REED** ; **XIAOLI YU**. Adaptive multiple-band cfar detection of an optical pattern with unknown spectral distribution. *IEEE Transactions on Acoustics, Speech, and Signal Processing*, 1990, vol. 38 (10), 1760-1770
- Modeling the distribution of normal data in pre-trained deep features for anomaly detection. **O. RIPPEL** ; **P. MERTENS** ; **D. MERHOF**. 2020 25th International Conference on Pattern Recognition (ICPR). IEEE Computer Society, January 2021, 6726-6733
- **MARCO RUDOLPH** ; **TOM WEHRBEIN** ; **BODO ROSENHAHN** ; **BASTIANWANDT**. Fully convolutional cross-scale-flows for image based defect detection. *Winter Conference on Applications of Computer Vision (WACV)*, January 2022, vol. 2, 6
- **LUKAS RUFF** ; **NICO G ORNITZ** ; **LUCAS DEECKE** ; **SHOAIB AHMED SIDDIQUI** ; **ROBERT VANDERMEULEN** ; **ALEXANDER BINDER** ; **EMMANUEL M ULLER** ; **MARIUS KLOFT**. Deep one-class classification. *International Conference on Machine Learning*, 2018, 4390-4399
- **LUKAS RUFF** ; **JACOB R KAUFFMANN** ; **ROBERT A VANDERMEULEN** ; **GR EGOIRE MONTAVON** ; **WOJCIECH SAMEK** ; **MARIUS KLOFT** ; **THOMAS G DIETTERICH** ; **KLAUS-ROBERT M ULLER**. A unifying review of deep and shallow anomaly detection. *Proceedings of the IEEE*, 2021
- **OLGA RUSSAKOVSKY** ; **JIA DENG** ; **HAO SU** ; **JONATHAN KRAUSE** ; **SANJEEV SATHEESH** ; **SEAN MA** ; **ZHIHENG HUANG** ; **ANDREJ KARPATHY** ; **ADITYA KHOSLA** ; **MICHAEL BERNSTEIN**. ImageNet Large Scale Visual Recognition Challenge. *IJCV*, 2015, vol. 115 (3), 211-252
- **CHRISTOPHE SAINT-JEAN** ; **FRANK NIELSEN**. *Online k-mle for mixture modeling with exponential families*, January 2015, 340-348
- **RAMPRASAATH R SELVARAJU** ; **MICHAEL COGSWELL** ; **ABHISHEK DAS** ; **RAMAKRISHNA VEDANTAM** ; **DEVI PARIKH** ; **DHRUV BATRA**. Grad-cam: Visual explanations from deep networks via gradient-based localization. *ICCV*, 2017
- **HUI-CHAO SHANG** ; **YOU-PING CHEN** ; **WENYONG YU** ; **ZU-DE ZHOU**. Online auto-detection method and system of presswork quality. *The International Journal of Advanced Manufacturing Technology*, 2007, vol. 33 (7-8), 756-765
- **LIONEL TARASSENKO** ; **PAUL HAYTON** ; **NICHOLAS CERNEAZ** ; **MICHAEL BRADY**. *Novelty detection for the identification of masses in mammograms*, 1995
- **DU-MING TSAI** ; **TSE-YUN HUANG**. Automated surface inspection for statistical textures. *Image and Vision computing*, 2003, vol. 21 (4), 307-323
- **SHASHANKA VENKATARAMANAN** ; **KUAN-CHUAN PENG** ; **RAJAT VIKRAM SINGH** ; **ABHIJIT MAHALANOBIS**. Attention guided anomaly localization in images. *ECCV*, 2020
- **XIANGHUA XIE** ; **MAJID MIRMEHDI**. Texems: Texture exemplars for defect detection on random textured surfaces. *IEEE PAMI*, 2007, vol. 29 (8), 1454-1464
- **JIHUN YI** ; **SUNGROH YOON**. Patch svdd: Patch-level svdd for anomaly detection and segmentation. *ACCV*, 2020
- **VITJAN ZAVRTANIK** ; **MATEJ KRISTAN** ; **DANIJEL SKOCAJ**. Draema discriminatively trained reconstruction embedding for surface anomaly detection. *Proceedings of the IEEE/CVF International Conference on Computer Vision*, 2021, 8330-8339
- **KANG ZHOU** ; **YUTING XIAO** ; **JIANLONG YANG** ; **JUN CHENG** ; **WEN LIU** ; **WEIXIN LUO** ; **ZAIWANG GU** ; **JIANG LIU** ; **SHENGHUA. GAO**. Encoding structure-texture relation with p-net for anomaly detection in retinal images. *ECCV*, 2020
- **MARIA ZONTAK** ; **ISRAEL COHEN**. Defect detection in patterned wafers using anisotropic kernels. *Machine Vision and Applications*, 2010, vol. 21 (2), 129-141
- From learning models of natural image patches to whole image restoration. **DANIEL ZORAN** ; **YAIR WEISS**. 2011 International Conference on Computer Vision. IEEE, 2011, 479-486